# EUROPEAN PATENT APPLICATION

(11) **EP 4 699 885 A1**
(43) Date of publication of application: **25.02.2026**
(21) Application number: 25195918.5
(22) Date of filing: 14.08.2025
(51) Int. Cl.: B60W 50/00, G07C 5/00

(54) **ELECTRONIC CONTROLLER, MANAGEMENT SYSTEM, MANAGEMENT METHOD, AND PROGRAM**

(30) Priority: 21.08.2024 JP 2024139911
(71) Applicant: TOYOTA JIDOSHA KABUSHIKI KAISHA, Toyota-shi, Aichi-ken 471-8571 (JP)
(72) Inventor: YAMAGUCHI, Yohsuke, Toyota-shi, 471-8571 (JP)
(74) Representative: J A Kemp LLP

(57) **Abstract**

An electronic controller, a management system, a management method, and a program are provided. The number of times a vehicle (30) satisfied a specific condition (RC1 to RC4) is defined as a satisfaction count. When the vehicle (30) satisfies the specific condition (RC1 to RC4) (S11: YES), processing circuitry (40) causes memory (42) to store (S13) specified information (RE) in a case in which the satisfaction count is less than a maximum storage count (NM) (S12: YES). The processing circuitry (40) updates (S26, S27) the maximum storage count (NM) based on the satisfaction count

## Description

### CROSS-REFERENCE TO RELATED APPLICATIONS

This application is based upon and claims the benefit of priority from Japanese Patent Application No.2024-139911, filed on August 21, 2024, the entire contents of which are incorporated herein by reference.

### BACKGROUND

### 1. Field

The following description relates to an electronic controller, a management system, a management method, and a program.

### 2. Description of Related Art

Japanese Laid-Open Patent Publication No. 2019-106224 discloses an electronic controller installed in a vehicle. The electronic controller includes memory and a processor. When the vehicle satisfies a specific condition, the processor causes the memory to store specified information.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, the present disclosure provides an electronic controller installed in a vehicle. The electronic controller includes processing circuitry and memory. The memory is configured to store specified information when the vehicle satisfies a specific condition. The memory stores a maximum storage count indicating a number of times the specified information may be stored. The maximum storage count corresponds to the specific condition. When the vehicle satisfies the specific condition, the processing circuitry is configured to cause the memory to store the specified information in a case in which a satisfaction count is less than the maximum storage count. The satisfaction count indicating a number of times the vehicle satisfied the specific condition. The processing circuitry is configured to execute an updating process that updates the maximum storage count based on the satisfaction count.

In another general aspect, the present disclosure provides a management system including a vehicle and a server. The vehicle includes an electronic controller. The electronic controller includes processing circuitry and memory. The memory stores specific conditions, types of specified information respectively linked to the specific conditions, and maximum storage counts respectively linked to the specific conditions. The maximum storage counts each indicates a number of times the specified information may be stored. The memory is configured to store the specified information when the vehicle satisfies a corresponding one of the specific conditions. When the vehicle satisfies one of the specific conditions and in a case in which a satisfaction count indicating a number of times the vehicle satisfied the one of the specific conditions is less than a corresponding one of the maximum storage counts, the processing circuitry is configured to cause the memory to store the specified information, and the processing circuitry is configured to transmit traveling information related to traveling of the vehicle to the server. The satisfaction count is one of satisfaction counts respectively corresponding to the specific conditions. The server is configured to execute receiving the traveling information from the vehicle, calculating satisfaction ratios based on the received traveling information, and transmitting the satisfaction ratios to the vehicle. The satisfaction ratios each indicates a ratio of a corresponding one of the satisfaction counts to a sum total of the satisfaction counts. The satisfaction ratios respectively correspond to the specific conditions. The vehicle is configured to update the maximum storage counts based on the received satisfaction ratios.

In another general aspect, the present disclosure provides a management method performed by a computer. The method includes storing, by memory of the computer installed in a vehicle, specified information when the vehicle satisfies a specific condition. The method further include storing, by the memory, a maximum storage count indicating a number of times the specified information may be stored. The method further includes causing, by processing circuitry of the computer, the memory to store the specified information when the vehicle satisfies the specific condition and in a case in which a satisfaction count indicating a number of times the vehicle satisfied the specific condition is less than the maximum storage count. The method further includes updating, by the processing circuitry, the maximum storage count based on the satisfaction count.

In another general aspect, the present disclosure provides a program stored on a non-transitory computer-readable storage medium. The program comprises instructions for causing a computer to execute a management process. The management process includes the various operations included in the management method.

The electronic controller, the management system, the management method, and the program update the maximum storage count based on the number of times the vehicle actually satisfied the specific condition. The specified information is stored when the vehicle actually satisfies the specific condition. Therefore, the storage maximum capacity for the specified information is dynamically changed in line with the vehicle usage.

The memory of the electronic controller may have a set storage maximum capacity. The specified information is stored when the vehicle satisfies the specific condition. Accordingly, it is desired that the storage maximum capacity for the specified information is dynamically changed in line with the vehicle usage. The above configurations facilitate such dynamic changes.

Other features and aspects will be apparent from the following detailed description, the drawings, and the claims.

### BRIEF DESCRIPTION OF THE DRAWINGS

Fig. 1 is a schematic diagram of a management system in accordance with an embodiment.
Fig. 2 is a schematic diagram of a correspondence table included in an electronic controller shown in Fig. 1.
Fig. 3 is a flowchart illustrating a series of processes including a process for storing specified information executed by the electronic controller shown in Fig. 1.
Fig. 4 is a flowchart illustrating a series of processes including an updating process for updating a maximum storage count executed by the electronic controller shown in Fig. 1.
Fig. 5 is a flowchart illustrating a series of processes including a determination related to an exclusion condition executed by the electronic controller shown in Fig. 1.
Fig. 6 is a table included in the electronic controller shown in Fig. 1, showing the correspondence table and a storage maximum capacity before the updating process of a first specific example.
Fig. 7 is a table included in the electronic controller shown in Fig. 1, showing frequency information of the first specific example.
Fig. 8 is a table included in the electronic controller shown in Fig. 1, showing the correspondence table and the storage maximum capacity after the updating process of the first specific example.
Fig. 9 is a table included in the electronic controller shown in Fig. 1, showing the frequency information of a second specific example.
Fig. 10 is a table included in the electronic controller shown in Fig. 1, showing the correspondence table and the storage maximum capacity after the updating process of the second specific example.
Fig. 11 is a schematic diagram of an electronic controller of a modified example.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### Overview of Management System

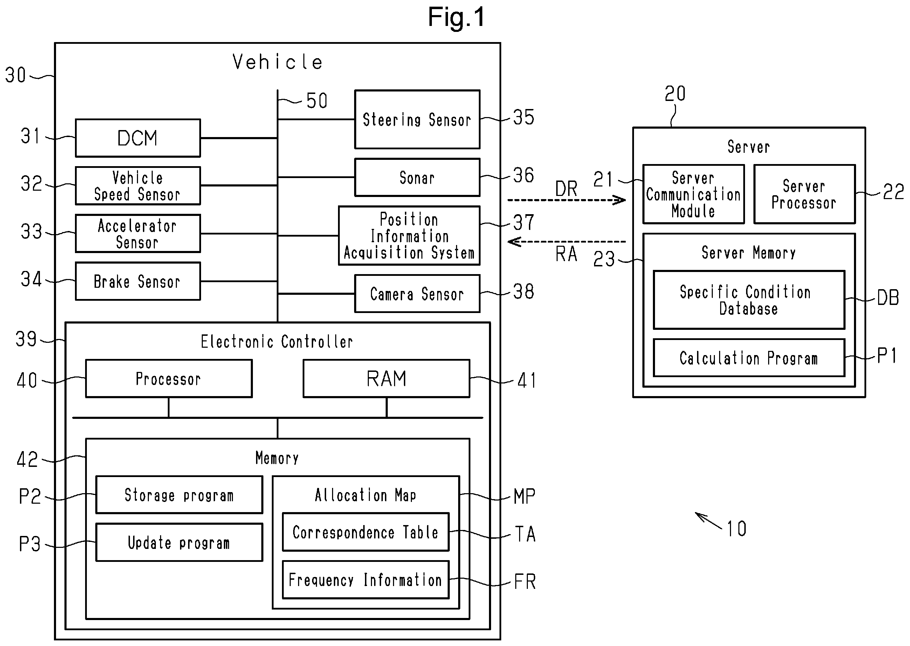

Figs. 1 to 10 illustrate a management system 10 in accordance with an embodiment of an electronic controller, a management system, a management method, a management process, a program product, a program, and a storage medium. As shown in Fig. 1, the management system 10 includes a server 20 and a vehicle 30. The server 20 and the vehicle 30 are connected to each other in a manner allowing for communication via an external communication network.

### Configuration of Server

The server 20 includes a server communication module 21, a server processor 22, and server memory 23. The server communication module 21, the server processor 22, and the server memory 23 are configured to perform communication with one another via a communication network in the server 20.

The server communication module 21 performs communication with the vehicle 30 via an external communication network. The server communication module 21 receives traveling information DR from the vehicle 30. The traveling information DR is related to traveling of the vehicle 30. When the vehicle 30 satisfies a specific condition RC, specified information RE is stored. The specific condition RC will be described in detail later.

The server memory 23 stores a calculation program P1 and a specific condition database DB. The calculation program P1 causes the server processor 22 to perform a series of processes including a calculating process. The server processor 22 executes the calculation program P1 stored in the server memory 23. The server processor 22 stores the result obtained through execution of the calculation program P1 in the specific condition database DB. The specific condition database DB includes a plurality of specific conditions RC for each vehicle 30.

### Configuration of Vehicle

The vehicle 30 includes a data communication module DCM 31, a vehicle speed sensor 32, an accelerator sensor 33, a brake sensor 34, and a steering sensor 35. The vehicle 30 further includes a sonar 36, a position information acquisition system 37, a camera sensor 38, and an electronic controller 39. The data communication module DCM 31, the vehicle speed sensor 32, the accelerator sensor 33, the brake sensor 34, the steering sensor 35, the sonar 36, the position information acquisition system 37, the camera sensor 38, and the electronic controller 39 are connected to one another via a bus 50.

The "DCM" stands for "data communication module". The data communication module DCM 31 performs communication with the server 20 via an external communication network.

The vehicle speed sensor 32 detects the speed of the vehicle 30. The vehicle speed sensor 32 transmits the detected speed of the vehicle 30 to the electronic controller 39.

The accelerator sensor 33 detects an accelerator operation amount of the vehicle 30. The accelerator sensor 33 transmits the accelerator operation amount of the vehicle 30 to the electronic controller 39.

The brake sensor 34 detects a brake operation amount of the vehicle 30. The brake sensor 34 transmits the brake operation amount of the vehicle 30 to the electronic controller 39.

The steering sensor 35 detects a steering angle of a steering wheel of the vehicle 30. The steering sensor 35 transmits the steering angle of the steering wheel of the vehicle 30 to the electronic controller 39.

The sonar 36 detects an object nearby the vehicle 30. The sonar 36 determines the type of the detected object. For example, the sonar 36 determines whether the detected object is a vehicle in front of the vehicle 30. The sonar 36 detects a distance from the vehicle 30 to the detected object, such as a detected front vehicle. The sonar 36 transmits the distance from the vehicle 30 to the detected object to the electronic controller 39. For example, the sonar 36 transmits the distance from the vehicle 30 to the detected front vehicle to the electronic controller 39.

The position information acquisition system 37 detects position information of the vehicle 30. The position information acquisition system 37 includes a global positioning system (GPS). The position information acquisition system 37 transmits the detected position information of the vehicle 30 to the electronic controller 39.

The camera sensor 38 captures an image of an object nearby the vehicle 30. The camera sensor 38 transmits the captured image to the electronic controller 39.

The vehicle 30 is configured to implement multiple functions included in an advanced driver assistance system (ADAS). The functions of the advanced driver assistance system ADAS include a pre-crash safety control PCS and an adaptive cruise control ACC. Specific implementations of these functions will not be described in detail.

The electronic controller 39 includes the speed of the vehicle 30 detected by the vehicle speed sensor 32 and the position information of the vehicle 30 detected by the position information acquisition system 37 in the traveling information DR of the vehicle 30. The electronic controller 39 transmits the traveling information DR from the data communication module DCM 31 to the server 20.

The electronic controller 39 is installed in the vehicle 30. The electronic controller 39 includes a computer. The electronic controller 39 includes a processor 40, RAM 41, and memory 42. The processor 40 executes programs stored in the memory 42 to perform various information processing. The processor 40 includes a central processing unit (CPU). In the present embodiment, the processor 40 corresponds to an execution device and processing circuitry.

The "RAM" stands for "random-access memory". The processor 40 can directly read and write to the RAM 41. The RAM 41 is volatile memory. The RAM 41 temporarily stores information being processed by the processor 40.

The memory 42 is read-only memory (ROM). The memory 42 is non-volatile memory. For example, the memory 42 includes an embedded MultiMediaCard (eMMC). The eMMC is an embedded type multimedia card. That is, the memory 42 is flash memory.

The memory 42 stores a storage program P2, an update program P3, and an allocation map MP. The memory 42 stores satisfaction counts. Each satisfaction count indicates the number of times a corresponding specific condition RC is actually satisfied. In the present embodiment, the memory 42 corresponds to storage and memory. The total capacity of the memory 42 that can be used for storing specified information RE is 1000 MB. That is, 1000 MB is "total storage capacity".

The storage program P2 includes a code that causes the processor 40 to perform a series of processes including a storing process. The update program P3 includes a code that causes the processor 40 to perform a series of processes including an updating process. The allocation map MP includes a correspondence table TA including specific conditions RC, and frequency information FR. The correspondence table TA includes a maximum storage count NM that is updated when the processor 40 executes the updating process.

### Correspondence Table

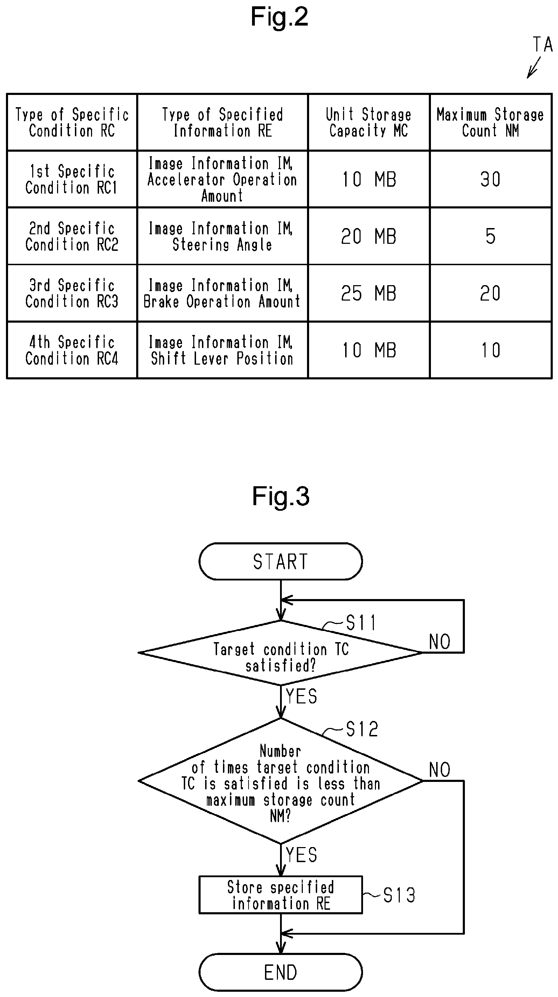

As shown in Fig. 2, the correspondence table TA includes types of specific conditions RC and types of specified information RE. The types of specific conditions RC indicate different specific conditions RC. The correspondence table TA includes unit storage capacities MC and maximum storage counts NM respectively corresponding to the specific conditions RC.

Subject specified information RE is stored when a corresponding specific condition RC is satisfied. The specific conditions RC include a first specific condition RC1, a second specific condition RC2, a third specific condition RC3, and a fourth specific condition RC4.

In the present embodiment, the specific conditions RC are conditions for operating the multiple functions included in the advanced driver assistance system ADAS. For example, the first specific condition RC1 and the second specific condition RC2 are conditions for operating the pre-crash safety control PCS of the advanced driver assistance system ADAS.

More specifically, the first specific condition RC1 is satisfied in a case in which the accelerator operation amount is greater than or equal to a predetermined amount, and a time obtained by dividing a distance from the vehicle 30 to a front vehicle, which is detected by the sonar 36, by the relative speed becomes less than or equal to a predetermined time. The second specific condition RC2 is satisfied in a case in which a distance from the vehicle 30 to an object, which is detected by the sonar 36, becomes less than or equal to a predetermined distance.

The third specific condition RC3 and the fourth specific condition RC4 are conditions for operating the adaptive cruise control ACC of the advanced driver assistance system ADAS. More specifically, the third specific condition RC3 is satisfied in a case in which a distance from the vehicle 30 to a front vehicle, which is detected by the sonar 36, becomes less than or equal to a predetermined distance. The fourth specific condition RC4 is satisfied in a case in which a shift lever (not shown) is shifted to the P-position or the N-position while the adaptive cruise control ACC is active. As described above, the traveling information DR may be used to determine whether the vehicle 30 satisfies the specific conditions RC1 to RC4. The traveling information DR is related to traveling of the vehicle 30.

The types of specified information RE are respectively linked to the specific conditions RC. Accordingly, each type of specified information RE is linked to a corresponding one of the specific conditions RC. The specified information RE is set, through experiments and simulations, as information the processor 40 stores when the vehicle 30 satisfies a corresponding one of the specific conditions RC. The specified information RE includes image information IM. The image information IM includes multiple images captured by the camera sensor 38. For example, the image information IM includes sequential images captured within a certain length of time. The specified information RE includes at least one of the accelerator operation amount, the brake operation amount, the steering wheel angle, and the shift lever position.

In an example, the specified information RE linked to the first specific condition RC1 includes the image information IM and the accelerator operation amount. The specified information RE linked to the second specific condition RC2 includes the image information IM and the steering wheel angle. The specified information RE linked to the third specific condition RC3 includes the image information IM and the brake operation amount. The specified information RE linked to the fourth specific condition RC4 includes the image information IM and the shift lever position.

The unit storage capacities MC are respectively linked to the specific conditions RC. The unit storage capacity MC is a capacity used in a single cycle of storing the specified information RE linked to a corresponding one of the specific conditions RC. In an example, the unit storage capacity MC linked to the first specific condition RC1 is 10 MB. The unit storage capacity MC linked to the second specific condition RC2 is 20 MB. The unit storage capacity MC linked to the third specific condition RC3 is 25 MB. The unit storage capacity MC linked to the fourth specific condition RC4 is 10 MB.

The maximum storage counts NM are respectively linked to the specific conditions RC. The maximum storage count NM indicates the number of times the specified information RE linked to a corresponding one of the specific conditions RC may be stored. In an example, the maximum storage count NM linked to the first specific condition RC1 is thirty. The maximum storage count NM linked to the second specific condition RC2 is five. The maximum storage count NM linked to the third specific condition RC3 is twenty. The maximum storage count NM linked to the fourth specific condition RC4 is ten.

### Frequency Information

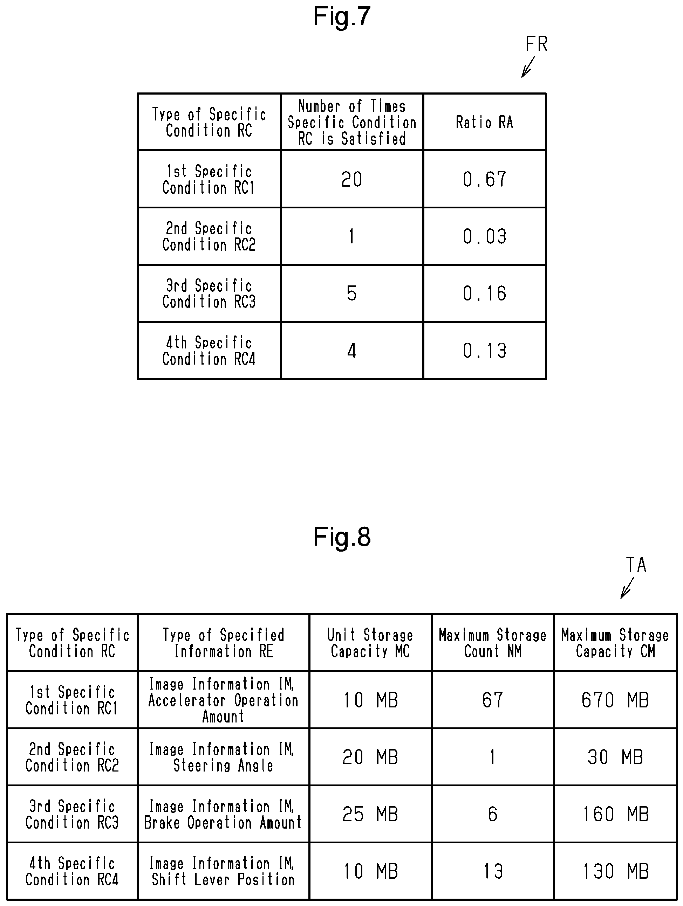

As shown in Fig. 7, the frequency information FR includes satisfaction ratios RA respectively corresponding to the specific conditions RC. The satisfaction ratio RA is a ratio of the number of times the vehicle 30 actually satisfied a corresponding one of the specific conditions RC to the total number of times the vehicle 30 actually satisfied each one of the specific conditions RC. That is, the satisfaction ratio RA is a ratio of a corresponding one of satisfaction counts to the sum total of the satisfaction counts.

In the present embodiment, the server 20 calculates the frequency information FR. The server processor 22 executes the calculation program P1 as the server processor 22 receives the traveling information DR from the vehicle 30. When the server processor 22 executes the calculation program P1, the server processor 22 first calculates the satisfaction count of each of the specific conditions RC based on the received traveling information DR. Then, the server processor 22 calculates the sum total of the satisfaction counts of the specific conditions RC. Next, the server processor 22 calculates the satisfaction ratio RA of each of the specific conditions RC by using the corresponding satisfaction count as a numerator. The server processor 22 stores the calculated satisfaction ratios RA of the specific conditions RC in the specific condition database DB. The server processor 22 transmits information indicating the calculated satisfaction ratios RA to the vehicle 30. Then, the server processor 22 ends the present cycle of processes.

### Storing Process

When the power supply state of the vehicle 30 is switched to the ON state, the processor 40 executes the storage program P2 for each of the specific conditions RC.

As shown in Fig. 3, the processor 40 executes the storage program P2 from step S11.

In step S11, the processor 40 determines whether the vehicle 30 actually satisfied a target condition TC. The target condition TC is a specific condition RC being subjected to the storage program P2. When the processor 40 determines that the vehicle 30 has not satisfied the target condition TC (S11: NO), the processor 40 repeats step S11. When the processor 40 determines that the target condition TC is actually satisfied (S11: YES), the processor 40 updates the satisfaction count of the target condition TC, which is stored in the memory 42. Then, the processor 40 proceeds to step S12.

In step S12, the processor 40 determines whether the satisfaction count of the target condition TC is less than the corresponding maximum storage count NM. Specifically, the processor 40 refers to the satisfaction counts and the maximum storage counts NM of the specific conditions RC, which are stored in the memory 42. The processor 40 determines whether the satisfaction count of the target condition TC is less than the maximum storage count NM linked to the target condition TC. When the satisfaction count of the target condition TC is greater than or equal to the maximum storage count NM linked to the target condition TC (S12: NO), the processor 40 ends the present cycle of processes. In this case, the processor 40 does not store the specified information RE linked to the target condition TC.

When the satisfaction count of the target condition TC is less than the maximum storage count NM linked to the target condition TC (S12: YES), the processor 40 proceeds to step S13.

In step S13, the processor 40 executes a storing process for storing the specified information RE linked to the target condition TC. In the storing process, the processor 40 causes the memory 42 to store the specified information RE linked to the target condition TC. Then, the processor 40 ends the present cycle of processes. In a case in which the power supply state of the vehicle 30 is the ON state when the processor 40 ends processing, the processor 40 repeats the same series of processes. In a case in which the power supply state of the vehicle 30 is the OFF state when the processor 40 ends processing, the processor 40 does not repeat the same series of processes.

### Updating Process

The processor 40 executes the update program P3 for the specific conditions RC, which are stored in the correspondence table TA, in predetermined cycles. When the processor 40 executes the update program P3, the processor 40 implements the management method by performing an updating process for updating the maximum storage count NM.

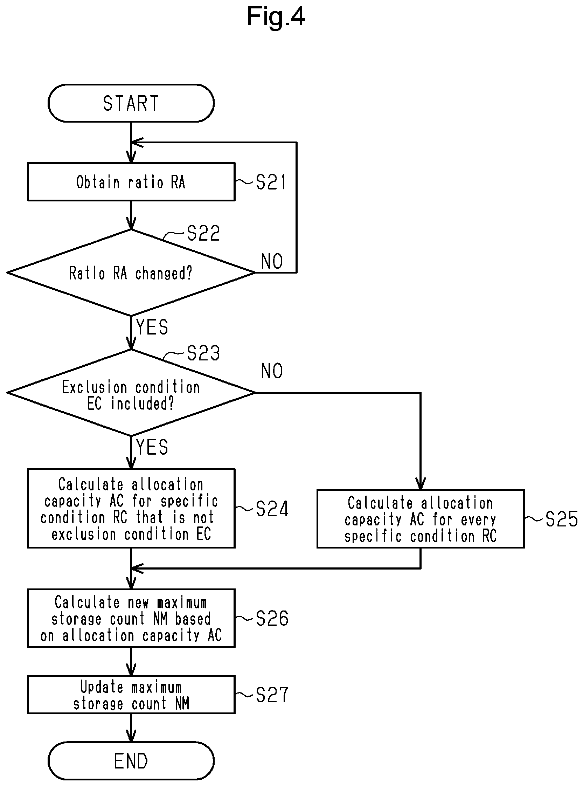

As shown in Fig. 4, the processor 40 executes the update program P3 from step S21.

In step S21, the processor 40 obtains a new set of the satisfaction ratios RA. Specifically, the processor 40 sends a transmission request for transmission of the satisfaction ratios RA to the server 20. When the processor 40 receives information indicating new satisfaction ratios RA from the server 20, the processor 40 updates the frequency information FR using the received satisfaction ratios RA. Then, the processor 40 proceeds to step S22.

In step S22, the processor 40 determines whether the obtained satisfaction ratios RA have changed from the satisfaction ratios RA included in the frequency information FR, which is stored in the memory 42. When there is no change in the satisfaction ratio RA of any of the specific conditions RC (S22: NO), the processor 40 repeats step S21. When there is a change in the satisfaction ratio RA of any of the specific conditions RC (S22: YES), the processor 40 proceeds to step S23.

In step S23, the processor 40 determines whether any of the specific conditions RC is an exclusion condition EC. The exclusion condition EC is a specific condition RC that is not subject to the updating process. In other words, the exclusion condition EC is a specific condition RC that is not referred to during the present updating process.

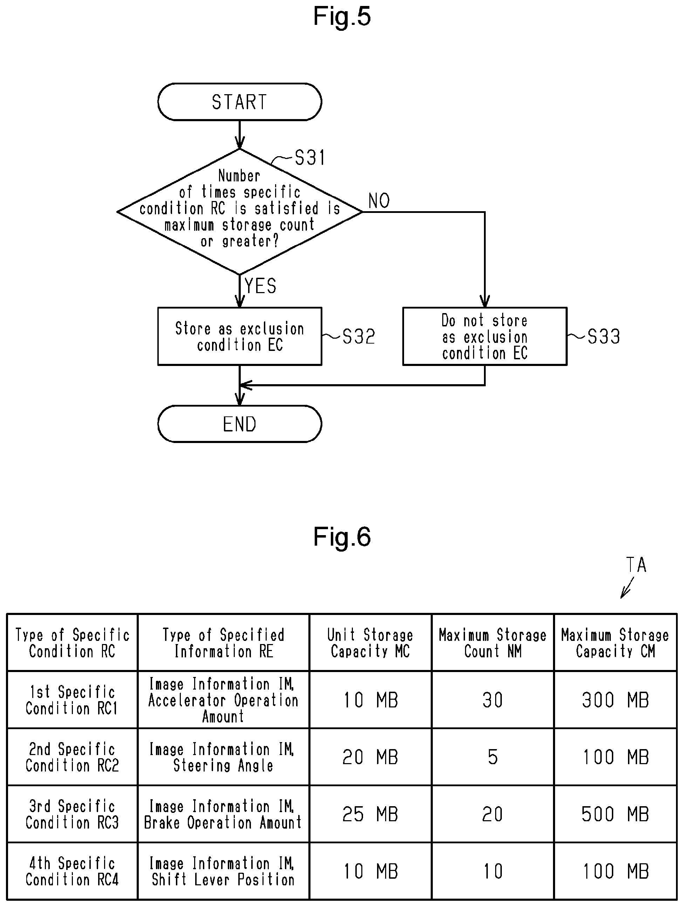

As shown in Fig. 5, when the processor 40 starts step S23, the processor 40 first performs step S31 for each of the specific conditions RC.

In step S31, the processor 40 determines whether the number of times the specified information RE linked to the subject specific condition RC is stored is greater than or equal to the corresponding maximum storage count NM. When the number of times the specified information RE linked to the subject specific condition RC is stored is greater than or equal to the corresponding maximum storage count NM (S31: YES), the processor 40 proceeds to step S32.

In step S32, the processor 40 sets the subject specific condition RC as the exclusion condition EC. The exclusion condition EC is a specific condition RC that is not subject to the updating process that changes the corresponding maximum storage count NM. The processor 40 causes the memory 42 to store that the subject specific condition RC is the exclusion condition EC. Then, the processor 40 ends step S23.

When the number of times the specified information RE linked to the subject specific condition RC is stored is less than the corresponding maximum storage count NM (S31: NO), the processor 40 proceeds to step S33.

In step S33, the processor 40 does not set the subject specific condition RC as the exclusion condition EC. Accordingly, the processor 40 causes the memory 42 to store that the subject specific condition RC is not the exclusion condition EC. Then, the processor 40 ends step S23.

The processor 40 performs steps S31 to S33 for every one of the specific conditions RC. When the memory 42 stores at least one specific condition RC as the exclusion condition EC, the processor 40 determines that the exclusion condition EC is included. When the memory 42 does not store any specific condition RC as the exclusion condition EC, the processor 40 determines that the exclusion condition EC is not included.

As shown in Fig. 4, when the processor 40 determines that the exclusion condition EC is included (S23: YES), the processor 40 proceeds to step S24.

In step S24, the processor 40 calculates an allocation capacity AC for every one of the specific conditions RC except for the exclusion condition EC. The allocation capacity AC is a capacity that can be allocated to a corresponding one of the specific conditions RC. Specifically, the processor 40 first multiplies each of the unit storage capacities MC of the specific conditions RC, except for the exclusion condition EC, by the corresponding maximum storage count NM, and calculates the sum total of these products. Next, the processor 40 multiplies the calculated sum total by each of the satisfaction ratios RA linked to the specific conditions RC to obtain the allocation capacity AC linked to the corresponding specific condition RC. Then, the processor 40 proceeds to step S26.

When the processor 40 determines that the exclusion condition EC is not included (S23: NO), the processor 40 proceeds to step S25. In step S25, the processor 40 calculates the allocation capacity AC for every one of specific conditions RC. More specifically, the processor 40 obtains an allocatable capacity for every one of the specific conditions RC by multiplying each of the unit storage capacities MC of the specific conditions RC by the corresponding maximum storage count NM. Next, the processor 40 calculates the sum total of the allocatable capacities. Subsequently, the processor 40 multiplies the calculated sum total by each of the satisfaction ratios RA linked to the specific conditions RC to obtain the allocation capacity AC linked to the corresponding specific condition RC. Then, the processor 40 proceeds to step S26.

In step S26, the processor 40 calculates new maximum storage counts NM from the allocation capacities AC. Specifically, the processor 40 divides each of the allocation capacities AC linked to the specific conditions RC by the unit storage capacity MC linked to the corresponding specific condition RC to obtain the maximum storage count NM linked to the corresponding specific condition RC. Then, the processor 40 proceeds to step S27.

In step S27, the processor 40 performs the updating process for updating the maximum storage counts NM. In the updating process, the processor 40 updates the maximum storage counts NM. In the updating process, the processor 40 updates each of the maximum storage counts NM linked to the specific conditions RC based on the corresponding satisfaction ratio RA. The allocation capacity AC calculated in step S24 or S25 becomes greater as the corresponding satisfaction ratio RA increases. Accordingly, in step S26, for the specific condition RC having a relatively high satisfaction ratio RA, the maximum storage count NM calculated by the processor 40 becomes smaller as the corresponding satisfaction ratio RA decreases. In this manner, in the updating process, the processor 40 increases the maximum storage count NM linked to the specific condition RC having the satisfaction ratio RA greater than the satisfaction ratio RA before the updating process. In contrast, in the updating process, the processor 40 decreases the maximum storage count NM linked to the specific condition RC having the satisfaction ratio RA less than the satisfaction ratio RA before the updating process.

In the updating process, when the satisfaction ratio RA of the specific condition RC subject to the updating process is greater than the satisfaction ratio RA before the updating process, the processor 40 increases the maximum storage count NM linked to the specific condition RC. In the updating process, when the satisfaction ratio RA of the specific condition RC subject to the updating process is less than the satisfaction ratio RA before the updating process, the processor 40 decreases the maximum storage count NM linked to the specific condition RC. The processor 40 stores the new maximum storage counts NM calculated in step S26 in the correspondence table TA, which is stored in the memory 42. Then, the processor 40 ends the present cycle of processes. Each of the satisfaction ratios RA of the specific conditions RC is calculated based on the satisfaction count of the corresponding specific condition RC. Accordingly, when the maximum storage count NM is updated based on the corresponding satisfaction ratio RA, the maximum storage count NM is updated based on the satisfaction count of the corresponding specific condition RC.

In the updating process of step S27, the processor 40 sets the total capacity of the memory 42 that can be used for storing the specified information RE to be less than or equal to the total capacity before the updating process.

### Operation of the Embodiment

The updating process of the maximum storage count NM will now be described using two specific examples.

### First Specific Example

The first specific example is a case in which no exclusion condition EC is included.

Fig. 6 illustrates a state that corresponds to the preceding cycle of the updating process. In other words, Fig. 6 illustrates a state before the present cycle of the updating process. As shown in Fig. 6, before the present cycle of the updating process, the maximum storage count NM linked to the first specific condition RC1 was thirty. The maximum storage count NM linked to the second specific condition RC2 was five. The maximum storage count NM linked to the third specific condition RC3 was twenty. The maximum storage count NM linked to the fourth specific condition RC4 was ten. The unit storage capacity MC linked to the first specific condition RC1 is 10 MB. The unit storage capacity MC linked to the second specific condition RC2 is 20 MB. The unit storage capacity MC linked to the third specific condition RC3 is 25 MB. The unit storage capacity MC linked to the fourth specific condition RC4 is 10 MB.

Storage maximum capacities CM respectively linked to the specific conditions RC each indicate the upper limit of the capacity that can be used for storing the specified information RE linked to the corresponding specific condition RC when the specific condition RC is actually satisfied. The storage maximum capacity CM is obtained by multiplying the unit storage capacity MC linked to the corresponding specific condition RC by the maximum storage count NM linked to the corresponding specific condition RC. That is, MC × NM = CM. Thus, before the present cycle of the updating process, the storage maximum capacities CM when the specific conditions RC were satisfied were as follows. The storage maximum capacity CM when the first specific condition RC1 was satisfied was 300 MB. The storage maximum capacity CM when the second specific condition RC2 was satisfied was 100 MB. The storage maximum capacity CM when the third specific condition RC3 was satisfied was 500 MB. The storage maximum capacity CM when the fourth specific condition RC4 was satisfied was 100 MB. The sum total of the storage maximum capacities CM, that is, the total storage capacity, was 1000 MB.

As apparent from Fig. 6, in the preceding cycle of the updating process, in other words, before the present cycle of the updating process, the satisfaction ratios RA respectively linked to the specific conditions RC in the frequency information FR were as follows. The satisfaction ratio RA of the first specific condition RC1 was 0.3. The satisfaction ratio RA of the second specific condition RC2 was 0.1. The satisfaction ratio RA of the third specific condition RC3 was 0.5. The satisfaction ratio RA of the fourth specific condition RC4 was 0.1.

In this case, when the processor 40 executes the update program P3, the processor 40 obtains information indicating these satisfaction ratios RA in the process of step S21. The processor 40 updates the frequency information FR in accordance with the obtained satisfaction ratios RA.

As shown in Fig. 7, in the frequency information FR updated in accordance with the obtained satisfaction ratios RA, the satisfaction count of the first specific condition RC1 is twenty. The satisfaction count of the second specific condition RC2 is one. The satisfaction count of the third specific condition RC3 is five. The satisfaction count of the fourth specific condition RC4 is four. Thus, the sum total of the satisfaction counts of the specific conditions RC is thirty.

As shown in Fig. 7, the satisfaction ratio RA of the first specific condition RC1 is 0.67. The satisfaction ratio RA of the second specific condition RC2 is 0.03. The satisfaction ratio RA of the third specific condition RC3 is 0.16. The satisfaction ratio RA of the fourth specific condition RC4 is 0.13. These satisfaction ratios RA are obtained as quotient values of 20/30, 1/30, 5/30, and 4/30, respectively.

As shown in Fig. 8, the processor 40 calculates the maximum storage counts NM respectively linked to the specific conditions RC in the processes of steps S25 and S26 in Fig. 4, as follows. The processor 40 first calculates the sum total of the allocatable capacities. The sum total of the allocatable capacities matches the sum total of the storage maximum capacities CM. Accordingly, the processor 40 obtains 1000 MB as the sum total of the allocatable capacities.

Next, the processor 40 calculates each of the allocation capacities AC respectively linked to the specific conditions RC by multiplying the sum total of the allocation capacities by the satisfaction ratio RA of the corresponding specific condition RC. The processor 40 multiplies 1000 MB, which is the sum total of the allocatable capacities, by 0.67, which is the satisfaction ratio RA of the first specific condition RC1, and obtains 670 MB as the allocation capacity AC of the first specific condition RC1. Next, the processor 40 divides 670 MB, which is the allocation capacity AC of the first specific condition RC1, by 10 MB, which is the unit storage capacity MC linked to the first specific condition RC1, and obtains sixty-seven as the maximum storage count NM of the first specific condition RC1.

The processor 40 multiplies 1000 MB, which is the sum total of the allocatable capacities, by 0.03, which is the satisfaction ratio RA of the second specific condition RC2, and obtains 30 MB as the allocation capacity AC of the second specific condition RC2. Next, the processor 40 divides 30 MB, which is the allocation capacity AC of the second specific condition RC2, by 20 MB, which is the unit storage capacity MC linked to the second specific condition RC2. The processor 40 drops the faction portion of the quotient and obtains one as the maximum storage count NM of the second specific condition RC2.

The processor 40 multiplies 1000 MB, which is the sum total of the allocatable capacities, by 0.16, which is the satisfaction ratio RA of the third specific condition RC3, and obtains 160 MB as the allocation capacity AC of the third specific condition RC3. Next, the processor 40 divides 160 MB, which is the allocation capacity AC of the third specific condition RC3, by 25 MB, which is the unit storage capacity MC linked to the third specific condition RC3. The processor 40 drops the faction portion of the quotient and obtains six as the maximum storage count NM of the third specific condition RC3.

The processor 40 multiplies 1000 MB, which is the sum total of the allocatable capacities, by 0.13, which is the satisfaction ratio RA of the fourth specific condition RC4, and obtains 130 MB as the allocation capacity AC of the fourth specific condition RC4. Next, the processor 40 divides 130 MB, which is the allocation capacity AC of the fourth specific condition RC4, by 10 MB, which is the unit storage capacity MC linked to the fourth specific condition RC4, and obtains thirteen as the maximum storage count NM of the fourth specific condition RC4.

The processor 40 updates the maximum storage counts NM in the correspondence table TA to the values calculated in the manner described above. The processor 40 updates the maximum storage counts NM linked to the four specific conditions RC based on the satisfaction ratios RA of the specific conditions RC. In other words, the processor 40 updates the maximum storage counts NM based on the number of times the vehicle 30 satisfied the specific conditions RC.

As apparent from Figs. 6 and 8, in the updating process of the maximum storage count NM, the processor 40 increased the maximum storage count NM linked to the first specific condition RC1 and the maximum storage count NM linked to the fourth specific condition RC4. As a result, the satisfaction ratio RA of the first specific condition RC1 and the satisfaction ratio RA of the fourth specific condition RC4 after the present cycle of the updating process of the maximum storage count NM shown in Fig. 7 are greater than those before the present cycle of the updating process shown in Fig. 6. In contrast, in the updating process of the maximum storage count NM, the processor 40 decreased the maximum storage count NM linked to the second specific condition RC2 and the maximum storage count NM linked to the third specific condition RC3. As a result, the satisfaction ratio RA of the second and specific condition RC2 and the satisfaction ratio RA of the third specific condition RC3 after the present cycle of the updating process of the maximum storage count NM shown in Fig. 7 are less than those before the present cycle of the updating process shown in Fig. 6.

In the present cycle of the updating process, the processor 40 decreased the total storage capacity of the memory 42 that can be used for storing the specified information RE from 1000 MB, which was the total storage capacity before the present cycle of the updating process shown in Fig. 6, to 990 MB, which is the total storage capacity after the present cycle of the updating process shown in Fig. 8.

### Second Specific Example

The second specific example is a case in which the exclusion condition EC is included.

The corresponding table TA and the storage maximum capacities CM before the updating process of the second specific example were the same as those of the first specific example. Thus, these elements will not be described in detail. The processor 40 executes the update program P3 to update the frequency information FR in accordance with the obtained satisfaction ratios RA.

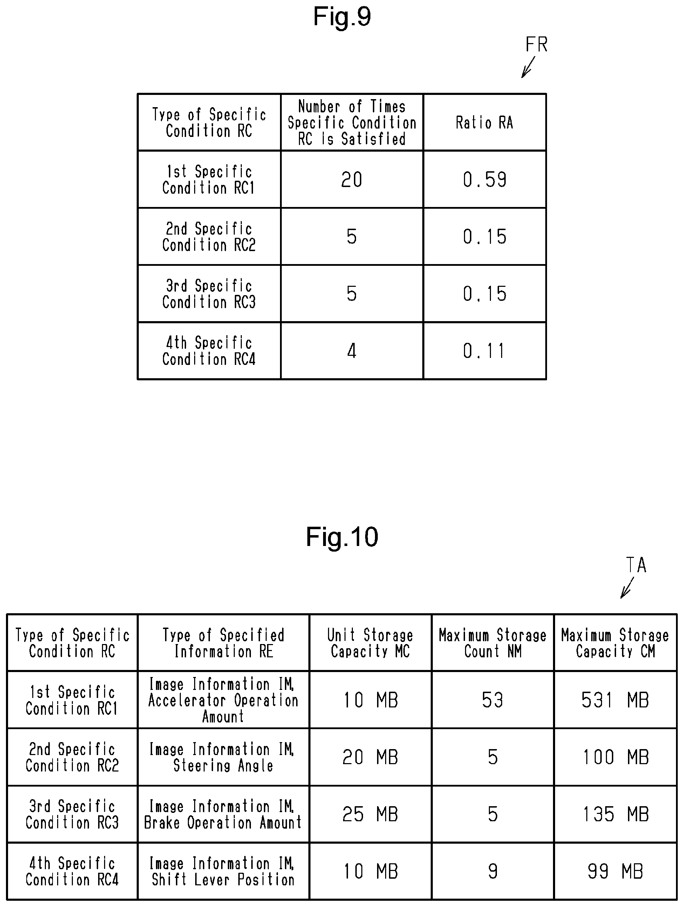

As shown in Fig. 9, in the frequency information FR updated in accordance with the obtained satisfaction ratios RA, the number of times the first specific condition RC1 was satisfied is twenty. The number of times the second specific condition RC2 was satisfied is five. The number of times the third specific condition RC3 was satisfied is five. The number of times the fourth specific condition RC4 was satisfied is four. Thus, the sum total of the satisfaction counts of the specific conditions RC is thirty-four. The satisfaction count of the second specific condition RC2 in Fig. 9 is greater than the satisfaction count of the second specific condition RC2 in Fig. 7. The satisfaction count of the second specific condition RC2 in Fig. 9 is five, which is equal to the maximum storage count NM linked to the second specific condition RC2 in Fig. 6.

As shown in Fig. 9, the satisfaction ratio RA of the first specific condition RC1 is 0.59. The satisfaction ratio RA of the second specific condition RC2 is 0.15. The satisfaction ratio RA of the third specific condition RC3 is 0.15. The satisfaction ratio RA of the fourth specific condition RC4 is 0.11. These satisfaction ratios RA are obtained as quotient values of 20/34, 5/34, 5/34, and 4/34, respectively.

In this case, the processor 40 determines that the second specific condition RC2 is the exclusion condition EC in the process of step S23. Therefore, in the process of step S24, the processor 40 calculates the allocation capacity AC for each of the first specific condition RC1, the third specific condition RC3, and the fourth specific condition RC4, except for the second specific condition RC2 that is the exclusion condition EC.

The processor 40 first calculates the sum total of the allocatable capacities. The sum total of the allocatable capacities matches the sum total of the storage maximum capacity CM of the first specific condition RC1, the storage maximum capacity CM of the third specific condition RC3, and the storage maximum capacity CM of the fourth specific condition RC4. Accordingly, the processor 40 obtains 900 MB as the sum total of the allocatable capacities. Based on the storage maximum capacities CM shown in Fig. 6, 300 MB + 500 MB + 100 MB = 900 MB.

Next, the processor 40 multiplies the sum total of the allocatable capacities by the satisfaction ratio RA of each of the first specific condition RC1, the third specific condition RC3, and the fourth specific condition RC4. In this manner, the processor 40 calculates the allocation capacity AC linked to each of the specific conditions RC. These numerical values are obtained as follows.

As shown in Fig. 10, the processor 40 multiplies 900 MB, which is the sum total of the allocatable capacities, by 0.59, which is the satisfaction ratio RA of the first specific condition RC1 shown in Fig. 9, and obtains 531 MB as the allocation capacity AC of the first specific condition RC1. Next, the processor 40 divides 531 MB, which is the allocation capacity AC of the first specific condition RC1, by 10 MB, which is the unit storage capacity MC linked to the first specific condition RC1. The processor 40 drops the faction portion of the quotient and obtains fifty-three as the maximum storage count NM of the first specific condition RC1.

The processor 40 multiplies 900 MB, which is the sum total of the allocatable capacities, by 0.15, which is the satisfaction ratio RA of the third specific condition RC3 shown in Fig. 9, and obtains 135 MB as the allocation capacity AC of the third specific condition RC3. Next, the processor 40 divides 135 MB, which is the allocation capacity AC of the third specific condition RC3, by 25 MB, which is the unit storage capacity MC linked to the third specific condition RC3. The processor 40 drops the faction portion of the quotient and obtains five as the maximum storage count NM of the third specific condition RC3.

The processor 40 multiplies 900 MB, which is the sum total of the allocatable capacities, by 0.11, which is the satisfaction ratio RA of the fourth specific condition RC4, and obtains 99 MB as the allocation capacity AC of the fourth specific condition RC4. Next, the processor 40 divides 99 MB, which is the allocation capacity AC of the fourth specific condition RC4, by 10 MB, which is the unit storage capacity MC linked to the fourth specific condition RC4. The processor 40 drops the faction portion of the quotient and obtains nine as the maximum storage count NM of the fourth specific condition RC4.

As shown in Fig. 10, the processor 40 updates the maximum storage counts NM in the correspondence table TA to the calculated values. The processor 40 updates the maximum storage counts NM linked to the three specific conditions RC, excluding the second specific condition RC2 that is the exclusion condition EC, based on the satisfaction ratios RA of the specific conditions RC. In other words, the processor 40 updates the maximum storage counts NM based on the number of times the vehicle 30 satisfied the specific conditions RC.

As apparent from Fig. 6, before the updating process, the total capacity of the memory 42 that can be used for storing the specified information RE was 1000 MB. After the updating process, the processor 40 set the total capacity of the memory 42 that can be used for storing the specified information RE to 865 MB. As apparent from Fig. 10, 531 MB + 100 MB + 135 MB + 99 MB = 865 MB. The storage maximum capacity CM of the second specific condition RC2 was maintained at 100 MB. In other words, after the update, the total capacity of the memory 42 that can be used for storing the specified information RE is smaller than that before the updating process. This is partly because the fraction portions of the quotients were dropped when calculating the maximum storage counts NM of the first, third, and fourth specific conditions RC1, RC3, and RC4.

### Advantages of the Present Embodiment

(1) With the electronic controller 39, the processor 40 updates the maximum storage count NM based on the number of times the vehicle 30 satisfied the corresponding specific condition RC. This dynamically changes the storage maximum capacity CM of the memory 42 that can be used for storing the specified information RE in accordance with the usage of the vehicle 30.
(2) The memory 42 stores the specific conditions RC, the types of the specified information RE, and the maximum storage counts NM. The types of the specified information RE are respectively linked to the specific conditions RC. The maximum storage counts NM are respectively linked to the specific conditions RC. When the vehicle 30 satisfies the target condition TC, the processor 40 causes the memory 42 to store the specified information RE linked to the target condition TC in a case in which the number of times the specified information RE has been stored is less than the maximum storage count NM linked to the target condition TC. The processor 40 updates each of the maximum storage counts NM respectively linked to the specific conditions RC based on the satisfaction ratios RA of the corresponding specific condition RC. This allows the processor 40 to update the maximum storage count NM linked to the specific condition RC subject to the updating process in accordance with the corresponding satisfaction ratio RA. The satisfaction ratio RA is a ratio of the satisfaction count of the specific condition RC subject to the updating process to the total number of times the specific conditions RC are satisfied.
(3) In the updating process, the processor 40 updates each of the maximum storage counts NM respectively linked to the specific conditions RC based on the satisfaction ratio RA of the corresponding specific condition RC. In this manner, the processor 40 updates the maximum storage counts NM respectively linked to the specific conditions RC, so that the capacities for storing different types of specified information RE respectively linked to the specific conditions RC are dynamically changed.
(4) In the updating process, the processor 40 increases the maximum storage count NM linked to the specific condition RC having the satisfaction ratio RA greater than the satisfaction ratio RA before the updating process. In contrast, the processor 40 decreases the maximum storage count NM linked to the specific condition RC having the satisfaction ratio RA less than the satisfaction ratio RA before the updating process. This allows the processor 40 to use some of the limited total capacity of the memory 42 for storing the specified information RE linked to the specific condition RC having the satisfaction ratio RA greater than the satisfaction ratio RA before the updating process. As a result, when the vehicle 30 satisfies the specific condition RC having the satisfaction ratio RA greater than the satisfaction ratio RA before the updating process, the processor 40 delays occurrence of a situation in which the specified information RE linked to the specific condition RC can no longer be stored.

Comparing Figs. 6 and 8, the processor 40 increases the maximum storage count NM linked to the first specific condition RC1 and the maximum storage count NM linked to the fourth specific condition RC4, each having the satisfaction ratio RA that is greater than the satisfaction ratio RA before the updating process. Specifically, the maximum storage count NM linked to the first specific condition RC1 was increased from thirty in Fig. 6 to sixty-seven in Fig. 8. The maximum storage count NM linked to the fourth specific condition RC4 was increased from ten to thirteen. In contrast, the processor 40 decreased the maximum storage count NM linked to the second specific condition RC2 and the maximum storage count NM linked to the third specific condition RC3, each having the satisfaction ratio RA that is less than the satisfaction ratio RA before the updating process. Specifically, the maximum storage count NM linked to the second specific condition RC2 was decreased from five to one. The maximum storage count NM linked to the third specific condition RC3 was decreased from twenty to six.

Comparing Figs. 6 and 10, the processor 40 increased the maximum storage count NM linked to the first specific condition RC1 having the satisfaction ratio RA greater than the satisfaction ratio RA before the updating process. Specifically, the maximum storage count NM linked to the first specific condition RC1 was increased from thirty in Fig. 6 to fifty-three in Fig. 10. In contrast, the processor 40 decreased the maximum storage count NM linked to the third specific condition RC3 having the satisfaction ratio RA less than the satisfaction ratio RA before the updating process. Specifically, the maximum storage count NM linked to the third specific condition RC3 was decreased from twenty in Fig. 6 to five in Fig. 10. Since the second specific condition RC2 is the exclusion condition EC, the maximum storage count NM linked to the second specific condition RC2 was not changed from five. The maximum storage count NM linked to the fourth specific condition RC4 was slightly decreased.

Comparing Figs. 8 and 10, the processor 40 increased the maximum storage count NM linked to the second specific condition RC2 having the satisfaction ratio RA greater than the satisfaction ratio RA before the updating process. Specifically, the maximum storage count NM linked to the second specific condition RC2 was increased from one in Fig. 8 to five in Fig. 10. In contrast, the processor 40 decreased the maximum storage count NM linked to the first specific condition RC1 having the satisfaction ratio RA less than the satisfaction ratio RA before the updating process. Specifically, the maximum storage count NM linked to the first specific condition RC1 was decreased from sixty-seven in Fig. 8 to fifty-three in Fig. 10. The maximum storage count NM linked to the third specific condition RC3 and the maximum storage count NM linked to the fourth specific condition RC4 were slightly decreased.

(5) In the updating process, the processor 40 sets the total capacity of the memory 42 that can be used for storing the specified information RE to be less than or equal to the total capacity before the updating process. In this manner, the processor 40 avoids a situation in which the total capacity exceeds the upper limit as a result of the updating process.

(6) In the updating process, the processor 40 excludes the maximum storage count NM linked to the exclusion condition EC from the maximum storage count NM linked to the specific condition RC subject to the updating process. The storage capacity corresponding to the exclusion condition EC is already used for storing the corresponding specified information RE. The updating process does not refer to the used storage capacity linked to the exclusion condition EC as available capacity. In this manner, the processor 40 avoids a situation in which unavailable capacity is allocated as available capacity during the updating process.

(7) In the updating process, in a case in which the satisfaction ratio RA linked to the specific condition RC subject to the updating process is greater than the satisfaction ratio RA before the updating process, the processor 40 increases the maximum storage count NM linked to the specific condition RC. In the updating process, in a case in which the satisfaction ratio RA linked to the specific condition RC subject to the updating process is less than the satisfaction ratio RA before the updating process, the processor 40 decreases the maximum storage count NM linked to the specific condition RC. This updates the maximum storage count NM linked to the specific condition RC subject to the updating process in accordance with a change in the satisfaction ratio RA of the specific condition RC.

(8) The processor 40 transmits the traveling information DR to the server 20. The processor 40 receives information indicating the satisfaction ratio RA calculated based on the traveling information DR from the server 20. There may be a limit to the capacity of the memory 42 that can be mounted on the electronic controller 39. Accordingly, when the server 20 external to the vehicle 30 calculates the satisfaction ratio RA, the electronic controller 39 is free from such calculation load.

(9) The memory 42 is flash memory. Flash memory, such as the eMMC described in the above embodiment, randomly stores information in a vacant region. Therefore, when flash memory is used as the memory 42 of the electronic controller 39, it is extremely difficult to divide the storage region of the memory 42 for each of the specific conditions RC in advance. Accordingly, when the maximum storage counts NM are updated in a manner as described in the above embodiment, the technique that dynamically changes the maximum storage capacities CM obtains advantage (1) effectively.

(10) The specific condition RC is a condition for activating the advanced driver assistance system installed in the vehicle 30. The advanced driver assistance system is often activated when a serious incident, such as a collision, occurs. The cause of such an incident may be analyzed effectively using images of the surrounds of the vehicle 30 and information related to the vehicle 30 when the advanced driver assistance system was activated. The volume of information acquired when the advanced driver assistance system is activated may be quite large. Accordingly, when the maximum storage counts NM are updated in a manner as described in the above embodiment, the technique that dynamically changes the maximum storage capacities obtains advantage (1) effectively when storing a vast amount of information.

### Modified Examples

The above embodiment may be modified as follows. The above embodiment and the following modifications can be combined as long as the combined modifications remain technically consistent with each other.

In the above embodiment, the server 20 calculates the satisfaction ratio RA. Instead, the vehicle 30 may calculate the satisfaction ratio RA. In this case, the processor 40 does not have to transmit the traveling information DR to the server 20. The processor 40 does not have to receive information indicating the satisfaction ratio RA from the server 20. In this case, the management system 10 does not have to include the server 20.

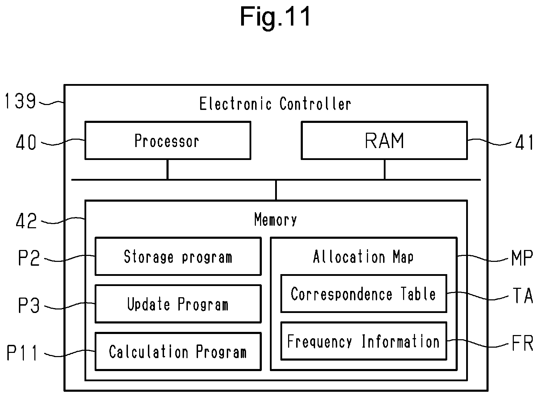

Fig. 11 shows an example in which the vehicle 30 calculates the satisfaction ratio RA. In Fig. 11, the memory 42 included in an electronic controller 139 of the vehicle 30 stores a calculation program P11. The processor 40 executes the calculation program P11 to obtain the satisfaction counts of the specific conditions RC and calculate the satisfaction ratios RA of the specific conditions RC. More specifically, the processor 40 determines whether the vehicle 30 satisfied the specific conditions RC based on the traveling information DR. Next, the processor 40 obtains the number of times the vehicle 30 satisfied each of the specific conditions RC by causing the memory 42 to store the number of times the vehicle 30 satisfied each of the specific conditions RC. Then, the processor 40 calculates the satisfaction ratio RA for each of the specific conditions RC based on the obtained satisfaction count of the corresponding specific condition RC. Specifically, the processor 40 counts the number of times an affirmative determination was given in step S11, and calculates the satisfaction ratio RA of each of the specific conditions RC using the obtained count.

In the example shown in Fig. 11, there is no need for the vehicle 30 to communicate with the server 20 when the electronic controller 139 obtains the satisfaction ratios RA of the specific conditions RC. This allows the electronic controller 139 to update the maximum storage counts NM without performing communication with the server 20.

At least one of the data communication module DCM 31, the vehicle speed sensor 32, the accelerator sensor 33, the brake sensor 34, the steering sensor 35, the sonar 36, the position information acquisition system 37, and the camera sensor 38 may be omitted from the vehicle 30. Instead of or in addition to these sensors, the vehicle 30 may include a different sensor. The sensors included in the vehicle 30 may be changed in accordance with the traveling information DR or the specified information RE.

Instead of or in addition to the sonar 36, the vehicle 30 may include, for example, a light detection and ranging (LiDAR) sensor. The LiDAR sensor is configured to detect a distance from the vehicle 30 to an object nearby the vehicle 30.

The position information acquisition system 37 is not limited to GPS, and may be, for example, a global navigation satellite system (GNSS), a real-time kinematic positioning (RTK) system, or a LiDAR sensor.

The electronic controller 39 may be circuitry including one or more processors that execute various processes in accordance with a computer program (software). The electronic controller 39 may be circuitry including one or more dedicated hardware circuits, such as an application-specific integrated circuit (ASIC), that executes at least part of various processes. The electronic controller 39 may be circuitry including a combination of the above. The processor includes a CPU and memory, such as RAM, ROM, or the like. The memory stores program codes or instructions configured to cause the CPU to execute processes. The memory, which is a computer-readable storage medium, may include any type of non-transitory computer-readable storage medium that is accessible by a general-purpose or dedicated computer. The same applies to the server 20.

The memory 42 does not have to be an eMMC. For example, the memory 42 may be a solid state drive (SSD), which is flash memory. The memory 42 does not have to be flash memory. For example, the memory 42 may be a hard disk drive (HDD) that stores information on a magnetic disk.

In the above embodiment, the memory 42 stores the correspondence table TA and the frequency information FR. Instead, the memory 42 may store the correspondence table TA including the satisfaction ratios RA. The memory 42 may store the satisfaction ratios RA of the specific conditions RC in association with the specific conditions RC included in the correspondence table TA.

The descriptions of the specific conditions RC are not limited to the examples described in the above embodiment. For example, there may be a specific conditions RC that is satisfied when the vehicle speed is higher than or equal to a predetermined speed, and the brake operation amount becomes greater than or equal to a predetermined amount. The specific conditions RC do not have to be used for activating the advanced driver assistance system. For example, there may be a specific condition RC that is satisfied when the vehicle 30 has been stopped.

The specified information RE linked to the specific conditions RC is not limited to the examples described in the above embodiment. For example, the same type of specified information RE may be linked to the specific conditions RC. Alternatively, the specified information RE may include image information IM of sequential images captured within a predetermined period, and the predetermined period may differ between the specified information RE linked to different specific conditions RC. The unit storage capacity MC of the specified information RE may correspond to the number of captured images.

The specified information RE is not limited to information obtained at a time point at which the specific condition RC is actually satisfied. For example, the specified information RE may include image information IM corresponding to a predetermined period extending before and after a time point at which the specific condition RC is actually satisfied. In this case, the processor 40 sequentially obtains images and temporarily stores the obtained images in, for example, the RAM 41. Then, after the specific condition RC is actually satisfied, the processor 40 may cause the memory 42 to store the images obtained during the predetermined period, which are temporarily stored in the RAM 41.

The memory 42 does not have to store the specific conditions RC. For example, the vehicle 30 may include memory separate from the memory 42. In this case, the separate memory may store the specific conditions RC.

The maximum storage count NM of the specified information RE may be stored in the memory 42 when a single specific condition RC is actually satisfied. For example, the processor 40 may store the specified information RE using the single specific condition RC as the target condition TC. For example, the processor 40 may use a data region differing from that of the specified information RE for executing the storing process of the specified information RE. The processor 40 may increase the maximum storage count NM when the satisfaction count of the single specific condition RC increases.

In the updating process of the maximum storage count NM, the processor 40 may change the total capacity of the memory 42 that can be used for storing the specified information RE. For example, in the updating process of the maximum storage count NM, the processor 40 may set the total capacity of the memory 42 that can be used for storing the specified information RE to be less than or equal to the upper limit capacity of the memory 42. In this case, the total capacity that can be used for storing the specified information RE may become greater than the total capacity before the updating process.

In the updating process of the maximum storage count NM, when the exclusion condition EC is included, the processor 40 may correct the satisfaction ratio RA of the specific condition RC the subject to the updating process. Specifically, in the case of the second specific example described above, the processor 40 may correct the satisfaction ratios RA so that the sum total of the satisfaction ratio RA of the first specific condition RC1, the satisfaction ratio RA of the third specific condition RC3, and the satisfaction ratio RA of the fourth specific condition RC4 equals 1. That is, the satisfaction ratios RA of the specific conditions RC except for the exclusion condition EC may be normalized. This optimally uses the capacity of the memory 42 when calculating the allocation capacities AC.

When the exclusion condition EC is included, the processor 40 does not have to update the maximum storage counts NM. In other words, the processor 40 may update the maximum storage counts NM only when the exclusion condition EC is not included in the specific conditions RC.

When the exclusion condition EC is included, the processor 40 may add the maximum storage count NM linked to the exclusion condition EC to the subject to the updating process. In this case, the processor 40 may stop the storing process in which the exclusion condition EC is used the target condition TC.

In the process of updating the maximum storage count NM, when the satisfaction ratio RA of the specific condition RC subject to the updating process is greater than the satisfaction ratio RA before the updating process, the processor 40 does not have to increase the maximum storage count NM linked to the specific condition RC. In the process of updating the maximum storage count NM, when the satisfaction ratio RA of the specific condition RC subject to the updating process is less than the satisfaction ratio RA before the updating process, the processor 40 does not have to decrease the maximum storage count NM linked to the specific condition RC.

In the process of updating the maximum storage count NM, the processor 40 does not have to increase the maximum storage count NM linked to every one of the specific conditions RC having the satisfaction ratio RA greater than the satisfaction ratio RA before the updating process. In the process of updating the maximum storage count NM, the processor 40 does not have to decrease the maximum storage count NM linked to every one of the specific conditions RC having the satisfaction ratio RA less than the satisfaction ratio RA before the updating process.

In an example, the processor 40 may increase the maximum storage count NM linked to only one of the specific conditions RC subject to the updating process, and the only one specific condition RC may have the satisfaction ratio RA that increased most compared to the satisfaction ratio RA before the updating process. In this case, the processor 40 may uniformly decrease or maintain the maximum storage count NM linked to the other ones of the specific conditions RC subject to the updating process. The processor 40 may update the maximum storage count NM linked to at least one of the specific conditions RC based on the satisfaction ratios RA of the specific conditions RC. In this manner, the process for changing the maximum storage counts NM is not limited to the examples described in the above embodiment.

In the process of updating the maximum storage count NM, the processor 40 does not have to update the maximum storage counts NM respectively linked to the specific conditions RC based on the satisfaction ratios RA of the specific conditions RC. In an example, in the process of updating the maximum storage count NM, the processor 40 may update the maximum storage counts NM respectively linked to the specific conditions RC based on the satisfaction ratio RA of one of the specific conditions RC. In another example, in the updating process of the maximum storage count NM, the processor 40 may update the maximum storage count NM linked to only one of the specific conditions RC.

The processor 40 may update the maximum storage count NM linked to the specific condition RC based on the satisfaction count of the corresponding specific condition RC, without using the satisfaction ratio RA. For example, the processor 40 may increase the maximum storage count NM linked to the first specific condition RC1 as the satisfaction count of the first specific condition RC1 increases.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electronic controller (39) installed in a vehicle (30), the electronic controller (39) comprising:
processing circuitry (40); and
memory (42), wherein
the memory (42) is configured to store (S13) specified information (RE) when the vehicle (30) satisfies a specific condition (RC1 to RC4) (S11: YES),
the memory (42) stores a maximum storage count (NM) indicating a number of times the specified information (RE) may be stored, the maximum storage count (NM) corresponding to the specific condition (RC1 to RC4),
when the vehicle (30) satisfies the specific condition (RC1 to RC4) (S11: YES), the processing circuitry (40) is configured to cause the memory (42) to store (S13) the specified information (RE) in a case in which a satisfaction count indicating a number of times the vehicle (30) satisfied the specific condition (RC1 to RC4)is less than the maximum storage count (NM) (S12: YES), and
the processing circuitry (40) is configured to execute an updating process (S26, S27) that updates the maximum storage count (NM) based on the satisfaction count.

2. The electronic controller according to claim 1, wherein
the specific condition (RC1 to RC4) is one of specific conditions (RC1 to RC4),
the satisfaction count is one of satisfaction counts respectively corresponding to the specific conditions (RC1 to RC4),
the storage maximum count is one of storage maximum counts respectively corresponding to the specific conditions (RC1 to RC4),
the memory (42) stores the specific conditions (RC1 to RC4), types of the specified information (RE) respectively linked to the specific conditions (RC1 to RC4), and the maximum storage counts (NM) respectively linked to the specific conditions (RC1 to RC4),
the specific conditions (RC1 to RC4) include a target condition (TC),
when the vehicle (30) satisfies the target condition (TC) (S11: YES), the processing circuitry (40) is configured to cause the memory (42) to store (S13) the specified information (RE) linked to the target condition (TC) in a case in which the satisfaction count of the target condition (TC) is less than the maximum storage count (NM) linked to the target condition (TC) (S12: YES), and
the updating process updates (S27) each of the maximum storage counts (NM) based on a satisfaction ratio (RA) (S21 to S26) indicating a ratio of the satisfaction count of a corresponding one of the specific conditions (RC1 to RC4) to a sum total of the satisfaction counts, the maximum storage counts (NM) respectively linked to the specific conditions (RC1 to RC4) respectively corresponding to the satisfaction counts.

3. The electronic controller according to claim 2, wherein
the satisfaction ratio (RA) is one of satisfaction ratios respectively corresponding to the specific conditions (RC1 to RC4), and
the updating process updates each of the maximum storage counts (NM) based on a corresponding one of the satisfaction ratios (RA), the maximum storage counts (NM) respectively linked to the specific conditions (RC1 to RC4) respectively corresponding to the satisfaction ratios.

4. The electronic controller according to claim 3, wherein in the updating process,
the processing circuitry (40) increases the maximum storage count (NM) linked to the specific condition (RC1, RC4) having the satisfaction ratio (RA) greater than the satisfaction ratio (RA) before the updating process, and
the processing circuitry (40) decreases the maximum storage count (NM) linked to the specific condition (RC2, RC3) having the satisfaction ratio (RA) less than the satisfaction ratio (RA) before the updating process.

5. The electronic controller according to claim 4, wherein
the memory (42) has a total storage capacity that can be used for storing the specified information (RE), and
the processing circuitry (40) sets the total storage capacity after the updating process to be less than or equal to the total storage capacity before the updating process.

6. The electronic controller according to any one of claims 2 to 5,
wherein the updating process does not update the maximum storage count (NM) linked to an exclusion condition (EC) (S24), the exclusion condition (EC) being the specific condition (RC1 to RC4) linked to the satisfaction count greater than or equal to the maximum storage count (NM) (S23: YES).

7. The electronic controller according to any one of claims 2 to 6, wherein
in the updating process,
when the satisfaction ratio (RA) linked to the specific condition (RC2) subject to the updating process is greater than the satisfaction ratio (RA) before the updating process, the processing circuitry (40) increases the maximum storage count (NM) linked to the specific condition (RC2), and
when the satisfaction ratio (RA) linked to the specific condition (RC1, RC3, and RC4) subject to the updating process is less than the satisfaction ratio (RA) before the updating process, the processing circuitry (40) decreases the maximum storage count (NM) linked to the specific condition (RC1, RC3, RC4).

8. The electronic controller according to any one of claims 2 to 7, wherein
the satisfaction ratio (RA) is calculated based on traveling information (DR) related to traveling of the vehicle (30), and
the processing circuitry (40) is configured to execute
transmitting the traveling information (DR) to a server (20) external to the vehicle (30), and
receiving information indicating the satisfaction ratio (RA) from the server (20).

9. The electronic controller according to any one of claims 1 to 8, wherein
the processing circuitry (40) determines (S11) whether the vehicle (30) satisfies the specific condition (RC1 to RC4) based on traveling information (DR) related to traveling of the vehicle (30), and
the processing circuitry (40) obtains the satisfaction count by causing the memory (42) to store the satisfaction count.

10. The electronic controller according to any one of claims 1 to 9,
wherein the memory (42) includes flash memory.

11. The electronic controller according to any one of claims 1 to 10, wherein
an advanced driver assistance system is installed in the vehicle (30), and
the advanced driver assistance system is activated when the specific condition (RC1 to RC4) is satisfied.

12. A management system (10), comprising:
a vehicle (30); and
a server (20), wherein
the vehicle (30) includes the electronic controller (39) according to claim 2,
when the vehicle (30) satisfies the specific condition (RC1 to RC4) (S11: YES) and in a case in which the satisfaction count is less than the maximum storage count (NM) (S12: YES), the processing circuitry (40) is configured to cause the memory (42) to store (S13) the specified information (RE), and the processing circuitry (40) is configured to transmit traveling information (DR) related to traveling of the vehicle (30) to the server (20),
the server (20) is configured to execute
receiving the traveling information (DR) from the vehicle (30),
calculating the satisfaction ratios (RA) based on the received traveling information (DR), and
transmitting the satisfaction ratios (RA) to the vehicle (30), and
the vehicle (30) is configured to update (S27) the maximum storage counts (NM) based on the received satisfaction ratios (RA) (S21 to S26).

13. A management method performed by a computer, the method comprising:
storing (S13), by memory (42) of the computer installed in a vehicle (30), specified information (RE) when the vehicle (30) satisfies a specific condition (RC1 to RC4) (S11: YES);
storing, by the memory (42), a maximum storage count (NM) indicating a number of times the specified information (RE) may be stored;
causing, by processing circuitry (40) of the computer, the memory (42) to store (S13) the specified information (RE) when the vehicle (30) satisfies the specific condition (RC1 to RC4) (S11: YES) and in a case in which a satisfaction count indicating a number of times the vehicle (30) satisfied the specific condition (R1 to R4) is less than the maximum storage count (NM) (S12: YES); and
updating, by the processing circuitry (40), the maximum storage count (NM) based on the satisfaction count (S26, S27).

14. A program stored on a non-transitory computer-readable storage medium, the program comprising instructions for causing a computer to execute a management process, the management process comprising:
storing (S13), by memory (42) of the computer installed in a vehicle (30), specified information (RE) when the vehicle (30) satisfies a specific condition (RC1 to RC4) (S11: YES);
storing, by the memory (42), a maximum storage count (NM) indicating a number of times the specified information (RE) may be stored;
causing, by processing circuitry (40) of the computer, the memory (42) to store (S13) the specified information (RE) when the vehicle (30) satisfies the specific condition (RC1 to RC4) (S11: YES) and in a case in which a satisfaction count indicating a number of times the vehicle (30) satisfied the specific condition (R1 to R4) is less than the maximum storage count (NM) (S12: YES); and
updating, by the processing circuitry (40), the maximum storage count (NM) based on the satisfaction count (S26, S27).
